(19) Europäisches Patentamt
European Patent Office
Office européen des brevets

(11) Veröffentlichungsnummer : **0 383 163 B1**

(12) # EUROPÄISCHE PATENTSCHRIFT

(45) Veröffentlichungstag der Patentschrift :
**22.04.92 Patentblatt 92/17**

(51) Int. Cl.$^5$ : **E21B 43/22**

(21) Anmeldenummer : **90102343.2**

(22) Anmeldetag : **07.02.90**

(54) **Verfahren zur Stimulierung von Öl- und Gas-Sonden bei der Gewinnung von Öl und Gas aus unterirdishen Formationen und Stimulierungsmittel hierfür.**

(30) Priorität : **11.02.89 DE 3904092**

(43) Veröffentlichungstag der Anmeldung :
**22.08.90 Patentblatt 90/34**

(45) Bekanntmachung des Hinweises auf die Patenterteilung :
**22.04.92 Patentblatt 92/17**

(84) Benannte Vertragsstaaten :
**DE GB NL**

(56) Entgegenhaltungen :
**EP-A- 0 242 832**
**EP-A- 0 281 430**
**EP-A- 0 302 404**
**DE-A- 2 749 331**
**US-A- 3 562 156**
**US-A- 3 811 504**
**US-A- 3 836 552**
**US-A- 4 460 791**

(73) Patentinhaber : **HOECHST AKTIENGESELLSCHAFT**
**Postfach 80 03 20**
**W-6230 Frankfurt am Main 80 (DE)**

(72) Erfinder : **Bathelt, Heinrich, Dr.**
**Beckstrasse 21**
**W-8262 Altötting (DE)**
Erfinder : **Fischer, Reinhard**
**Putzenlehnerstrasse 3**
**W-8269 Burgkirchen (DE)**
Erfinder : **Schneider, Gerhart, Dr.**
**Ziegelheck 3**
**W-6240 Königstein/Taunus (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung betrifft ein Verfahren zur Stimulierung von Öl- und Gas-Sonden bei der Gewinnung von Öl und Gas aus unterirdischen Formationen, wobei die Öl/Gas enthaltende Formation im Bereich der Sonde mit einem Stimulierungsmittel aus der Gruppe der Fluortenside in Kontakt gebracht wird. Die Erfindung betrifft ferner ein Stimulierungsmittel.

Die verminderte Produktion und der Druckabfall in Öl- und Gas-Produktionssonden kann verschiedene Ursachen haben. Die Ablagerungen von organischen Substanzen, wie Asphaltene, Wachse und Paraffine, anorganische Niederschläge, quellende Tonmineralien oder bewegte Sandkörner, können die Permeabilität der Lagerstätte, insbesondere im Bereich der Sonde, reduzieren. Die Beschädigung der öl/gasführenden Formation kann auch durch zurückgehaltene Komponenten von beispielsweise Spülflüssigkeiten verursacht sein, welche die Kapillaren des Porenraumes der Formation undurchlässig gemacht haben.

Es ist bekannt, daß zur Behebung dieses Problems Stimulierungsflüssigkeiten eingesetzt werden, welche die Permeabilität der Lagerstätte, insbesondere in der Umgebung der Produktions- und Injektions-Sonden, wieder erhöhen. Diese Flüssigkeiten enthalten grenzflächenaktive Verbindungen, welche die Grenzflächenspannung an den Phasengrenzen reduzieren und die Benetzungseigenschaften des Lagerstättengesteins günstig beeinflussen. Als grenzflächenaktive Verbindungen (Stimulierungsmittel) werden in letzter Zeit vor allem fluorhaltige Tenside empfohlen. So werden in den US-Patentschriften 4,425,242; 4,460,791 und 4,594,200 Fluortenside mit einer relativ langen Polyalkylenglykolethergruppe im Molekül als Stimulierungsagens beschrieben, das in die zu behandelnde unterirdische Formation eingebracht wird.

Die mit Hilfe der bekannten Fluortenside erreichte Erniedrigung der obenerwähnten Grenzflächenspannungswerte läßt noch zu wünschen übrig. Die Wirksamkeit dieser Fluortenside wird auch durch Adsorptionsverluste beim Inkontaktbringen mit der zu behandelnden Formation mehr oder weniger reduziert. Es besteht also nach wie vor ein Bedürfnis nach geeigneten und hochwirksamen Fluortensiden für den in Rede stehenden Zweck.

Zur Lösung dieses Bedürfnisses wurde gefunden, daß Fluortenside mit einem sehr engen Bereich bezüglich der C-Atome im Perfluoralkylrest und mit der speziellen Gruppe $-N(CH_2CH_2OH)_2$ im Molekül vorteilhafte und unerwartet wirksame Stimulierungsmittel zur Behandlung der in Rede stehenden Formationen sind.

Das erfindungsgemäße verfahren zur Stimulierung von Öl- und Gas-Sonden bei der Gewinnung von Öl und Gas aus unterirdischen Formationen, wobei die Öl/Gas enthaltende Formation im Bereich der Sonde mit einem Stimulierungsmittel aus der Gruppe der Fluortenside in Kontakt gebracht wird, ist dadurch gekennzeichnet, daß als Stimulierungsmittel mindestens ein Fluortensid der nachstehenden Formeln (1) bis (3) eingesetzt wird,

$$R_f\text{-}CF{=}CHCH_2N(C_2H_4OH)_2 \qquad (1)$$

$$R'_f\text{-}CONHC_3H_6N(C_2H_4OH)_2 \qquad (2)$$

$$R''_f\text{-}CONHC_3H_6\underset{\downarrow \atop O}{N}(C_2H_4OH)_2 \qquad (3)$$

worin $R_f$, $R'_f$ und $R''_f$ ein Perfluoralkylrest mit 5 bis 8 C-Atomen ist, vorzugsweise mit 7 C-Atomen.

Die Perfluoralkylreste $R_f$, $R'_f$ und $R''_f$ sind vorzugsweise geradkettig. Die besonders bevorzugten Verbindungen der Formeln (1) bis (3) sind also

$$n\text{-}C_7F_{15}CF{=}CHCH_2N(C_2H_4OH)_2$$

$$n\text{-}C_7F_{15}CONHC_3H_6N(C_2H_4OH)_2$$

$$n\text{-}C_7F_{15}CONHC_3H_6\underset{\downarrow \atop O}{N}(C_2H_4OH)_2$$

Die erfindungsgemäß einzusetzenden Fluortenside sind in den Druckschriften deutsche Offenlegungsschrift 27 49 331, US-Patentschrift 3,836,552 und US-Patentschrift 3,562,156 beschrieben, wobei jedoch keinerlei Hinweis oder Anregung dafür vorkommt, daß gerade diese Fluortenside vorteilhafte und wirksame Mittel zur Stimulierung von Kohlenwasserstoffe führenden Formationen wären. Diese Fluortenside stellen mehr oder weniger viskose bis pastöse Substanzen dar. Die Fluortenside der Formel (1) können nach den folgenden

Reaktionsgleichungen hergestellt werden, in denen eine bestimmte Fluorverbindung als Beispiel eingesetzt ist:

$$C_8F_{17}CH_2CH_2J + NaOCH_3 \rightarrow C_8F_{17}CH{=}CH_2 + NaJ + CH_3OH$$

$$C_8F_{17}CH{=}CH_2 + NH(C_2H_4OH)_2 \rightarrow HF + C_7F_{15}CF{=}CHCH_2N(C_2H_4OH)_2$$

Die Fluortenside der Formel (2) können nach der folgenden Reaktionsgleichung hergestellt werden, in der wiederum eine bestimmte Fluorverbindung als Beispiel eingesetzt ist:

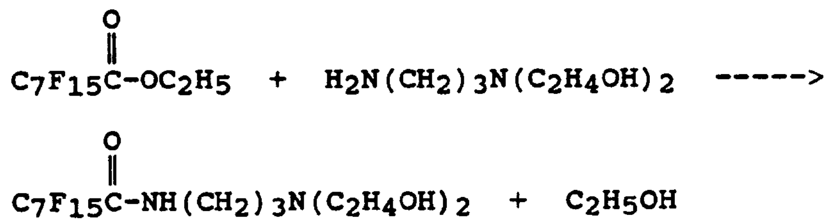

Die Fluortenside der Formel (3) können nach der folgenden Reaktionsgleichung hergestellt werden:

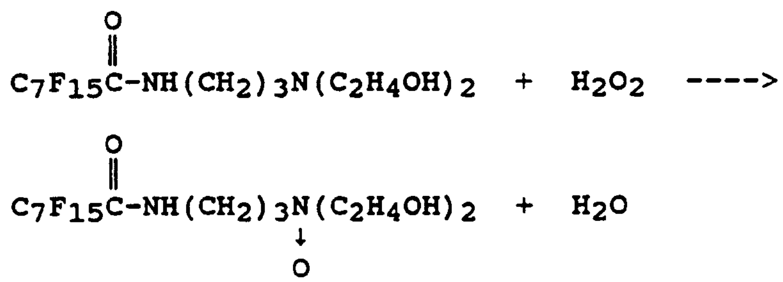

Im übrigen sei auf die genannten Druckschriften verwiesen.

Die Wirksamkeit der erfindungsgemäßen Fluortenside wird überraschenderweise beträchtlich erhöht, wenn sie in Mischung mit bestimmten nicht-fluorierten, nichtionischen Tensiden eingesetzt werden, und zwar mit Alkoxypolyethylenglykolethern, die 6 bis 18 C-Atome, vorzugsweise 8 bis 15 C-Atome, im Alkoxyrest und 3 bis 15 Ethylenoxid-Einheiten, vorzugsweise 6 bis 12 Ethylenoxid-Einheiten, im Polyethylenglykoletherrest aufweisen, beispielsweise Octylpolyglykolether mit 10 Ethylenoxid-Einheiten, Decylpolyglykolether mit 6 Ethylenoxid-Einheiten und Isotridecylpolyglykolether mit 8 Ethylenoxid-Einheiten, oder mit Alkylphenoxypolyethylenglykolethern, die 6 bis 18 C-Atome, vorzugsweise 8 bis 12 C-Atome, im Alkylrest und 3 bis 15 Ethylenoxid-Einheiten, vorzugsweise 6 bis 12 Ethylenoxid-Einheiten, im Polyethylenglykoletherrest aufweisen, beispielsweise Octylphenol- oder Isooctylphenolpolyglykolether mit 10 Ethylenoxid-Einheiten, Nonylphenolpolyglykolether mit 10 Ethylenoxid-Einheiten und Dodecylphenolpolyglykolether mit 8 Ethylenoxid-Einheiten. Bei den erwähnten nicht-fluorierten, nichtionischen Tensiden handelt es sich also um ausgewählte Fettalkoholethoxylate und Alkylphenolethoxylate mit der angegebenen Anzahl von C-Atomen im hydrophoben Rest und mit der angegebenen Anzahl von Ethylenoxid-Einheiten. Die erfindungsgemäß einzusetzenden Fluortenside werden vorzugsweise mit einem oder mit mehreren (in der Regel mit einem) Fettalkoholethoxylat oder mit einem oder mehreren (in der Regel mit einem) Alkylphenolethoxylat kombiniert, wobei die Kombination mit Fettalkoholethoxylat bevorzugt ist. Diese Stimulierungsmittel aus Fluortensid und Fettalkoholethoxylat oder Alkylphenolethoxylat enthalten die beiden Mischungskomponenten im Gewichtsverhältnis von vorzugsweise 1 : 1. Die angegebenen Fluortenside werden besonders bevorzugt gemeinsam mit Fettalkoholethoxylat und mit Alkylphenolethoxylat eingesetzt. Bei diesen Mischungen aus drei Komponenten beträgt das Gewichtsverhältnis der Komponenten vorzugsweise 1 : 1 : 1. Die erfindungsgemäßen Stimulierungsmittel in Form der Fluortenside der Formeln (1) bis (3) oder in Form der beschriebenen Mischungen aus diesen Fluortensiden und den angegebenen Alkoxypolyethylenglykolethern und/oder Alkylphenoxypolyethylenglykolethern sind besonders wirksam, insbesondere jene mit den drei genannten Komponenten, was aus einem unerwartet hohen synergistischen Effekt resultieren dürfte.

Das aus den genannten drei Komponenten bestehende Stimulierungsmittel ist neu. Die Erfindung betrifft daher auch ein Mittel zur Stimulierung von Öl- und Gas-Sonden bei der Gewinnung von Öl und Gas aus unterirdischen Formationen. Das erfindungsgemäße Stimulierungsmittel besteht im wesentlichen aus a) mindestens einem Fluortensid der beschriebenen Formeln (1) bis (3), b) mindestens einem Alkoxypolyethylenglykolether

mit 6 bis 18 C-Atomen, vorzugsweise 8 bis 15 C-Atomen, im Alkoxyrest und 3 bis 15 Ethylenoxid-Einheiten, vorzugsweise 6 bis 12 Ethylenoxid-Einheiten, im Polyethylenglykoletherrest und aus c) mindestens einem Alkylphenoxypolyethylenglykolether mit 6 bis 18 C-Atomen, vorzugsweise 8 bis 12 C-Atomen, im Alkylrest und 3 bis 15 Ethylenoxid-Einheiten, vorzugsweise 6 bis 12 Ethylenoxid-Einheiten, im Polyethylenglykoletherrest, wobei die drei Komponenten a) bis c) im Gewichtsverhältnis von vorzugsweise 1 : 1 : 1 vorliegen. In der Regel wird von jeder Komponente nur ein Vertreter eingesetzt. Über die drei Komponenten gilt im übrigen das oben Gesagte. Die Herstellung der erfindungsgemäßen Stimulierungsmittel erfolgt durch Zusammenmischen der Komponenten, zweckmäßigerweise unter Rühren, bei einer Temperatur von vorzugsweise 20 bis 50 °C.

Die erfindungsgemäßen Stimulierungsmittel, das sind sowohl die Fluortenside der Formeln (1) bis (3) als auch die genannten Mischungen aus den Fluortensiden und den genannten Ethoxylaten, sind in der Regel in Wasser löslich. Zur Verbesserung der Handhabbarkeit (Gießbarkeit) werden sie im allgemeinen mit einer entsprechenden Menge Wasser und/oder mit niederen Alkoholen, wie Methanol, Ethanol, Propanol, Isopropanol und/oder Ethylenglykol abgemischt.

Das Inkontaktbringen der erfindungsgemäß einzusetzenden Stimulierungsmittel mit der kohlenwasserstofführenden unterirdischen Lagerstätte kann nach den an sich bekannten Methoden durchgeführt werden. Danach wird das Stimulierungsmittel vorzugsweise in einer Trägerflüssigkeit (gelöst oder dispergiert) eingesetzt, die im vorliegenden Fall zweckmäßigerweise im wesentlichen aus Wasser besteht. Die Konzentration an Stimulierungsmittel in der Trägerflüssigkeit kann in weiten Grenzen variieren, sie liegt bei 0,001 bis 10 Gew.-%, vorzugsweise bei 0,05 bis 5 Gew.-%, Gewichtsprozente bezogen auf das Gewicht der Trägerflüssigkeit. Die das Stimulierungsmittel enthaltende Trägerflüssigkeit wird vorzugsweise unter einem mehr oder weniger hohen Druck in die zu behandelnde Lagerstätte eingebracht, bis die angestrebte Erhöhung der Kohlenwasserstoff-Produktion wieder erreicht ist. Der wäßrigen Trägerflüssigkeit können niedere Alkohole (Methanol oder Isopropanol), Salze und/oder Säuren oder Laugen zur Einstellung eines vorteilhaften pH-Wertes der Flüssigkeit zugesetzt werden; mit diesen ebenfalls an sich bekannten Methoden kann gegebenenfalls eine bessere Verteilung des Stimulierungsmittels in der Lagerstätte erreicht werden (unter Trägerflüssigkeit werden also das flüssige Medium und alle weiteren Zusätze verstanden, ausgenommen das Stimulierungsmittel).

Die erfindungsgemäßen Stimulierungsmittel weisen eine Reihe von Vorteilen auf. Sie sind - wie bereits erwähnt - besonders wirksam und bringen daher eine wesentliche Erhöhung der Gewinnungsrate von Gas und Öl. Sie wirken auch schon in geringer Konzentration. Aufgrund ihrer besonderen Tensideigenschaften wird ferner eine hohe Wiedergewinnungsrate der Stimulierungsflüssigkeit erreicht; dies ist angesichts des hohen Preises von Fluortensiden ein weiterer besonderer Vorteil.

Die Erfindung wird nun an Beispielen noch näher erläutert:

Als Maß für die Wirksamkeit der beschriebenen Stimulierungsmittel wird ihr Adsorptionsverhalten an Oklahoma Nr.-1-Sand getestet. Diese Testmethode (die sich an jene anlehnt, die von Henry B. Clark et al. in Journal of Petroleum Technology, Juli 1982, Seiten 1 565 bis 1 569, beschrieben ist) wird nachstehend im einzelnen angegeben:

Die Adsorptionsteste werden in einer Bürette (Länge: 350 mm, Innendurchmesser: 19 mm), die zwischen zwei Glaswollagen mit 50 g Oklahoma Nr.-1-Sand gefüllt worden ist, durchgeführt. Die Testlösungen werden wie folgt hergestellt: Zunächst wird eine Lösung aus 50 Gew.-% Isopropanol, 49 Gew.-% destilliertem Wasser und 1 Gew.-% Stimulierungsmittel bereitet. 1 ml dieser 1gew.%igen Lösung wird in 250 ml einer 2gew.%igen wäßrigen KCl-Lösung aufgelöst (das sind etwa 40 mg Stimulierungsmittel pro Liter). 11 ml der so erhaltenen Testlösung werden in die Bürette eingefüllt und anschließend 1 bis 2 Stunden lang mit einem Druck von 35 150 Pa beaufschlagt. Danach wird durch Öffnen des Bürettenhahns und Anlegen eines Druckes von 105 450 Pa die Lösung herausgedrückt und ihre Oberflächenspannung nach Du Nouy (DIN 53 914) gemessen. Dieser Vorgang wird in der gleichen Bürette, mit der gleichen Sandfüllung, mit jeweils 11 ml Testlösung fünfmal wiederholt. Der Wert der Oberflächenspannung der dritten aus der Bürette herausgedrückten Testlösung (das ist das dritte Eluat) sollte weniger als 35 mN/m betragen, vorzugsweise weniger als 30 mN/m.

Es wurden die folgenden erfindungsgemäß einzusetzenden Stimulierungsmittel getestet:

Beispiel 1

Das Stimulierungsmittel ist eine Mischung aus n-$C_7F_{15}CF=CHCH_2N(C_2H_4OH)_2$, Isotridecylpolyglykolether mit 8 Ethylenoxid-Einheiten und Nonylphenolpolyglykolether mit 10 Ethylenoxid-Einheiten im Gewichtsverhältnis von 1 : 1 : 1.

Beispiel 2

Das Stimulierungsmittel ist eine Mischung aus n-$C_7F_{15}CONHC_3H_6N(C_2H_4OH)_2$, Isotridecylpolyglykolether

mit 8 Ethylenoxid-Einheiten und Nonylphenolpolyglykolether mit 10 Ethylenoxid-Einheiten im Gewichtsverhältnis von 1 : 1 : 1.

Beispiel 3

Das Stimulierungsmittel ist eine Mischung aus

$$n\text{-}C_7F_{15}CONHC_3H_6\underset{\substack{\downarrow\\ O}}{N}(C_2H_4OH)_2,$$

Isotridecylpolyglykolether mit 8 Ethylenoxid-Einheiten und Nonylphenolpolyglykolether mit 10 Ethylenoxid-Einheiten im Gewichtsverhältnis von 1 : 1 : 1.

Vergleichsbeispiel

Beispiel 1 wurde wiederholt, wobei als Fluorverbindung das im Handel erhältliche und als besonders wirksam bezeichnete Fluortensid Fluorad® Well Stimulation Additive FC-750 von Minnesota Mining and Manufacturing (3M) Company, USA (® = eingetragenes Warenzeichen von 3 M), eingesetzt wurde; dieses Fluortensid ist ein fluoriertes quartäres Alkylammoniumjodid.

Die Mischungen (Stimulierungsmittel) nach den erfindungsgemäßen Beispielen 1 bis 3 und dem Vergleichsbeispiel wurden durch Mischen der drei Komponenten bei Raumtemperatur bereitet.

In der nachstehenden Tabelle werden die Oberflächenspannungswerte des ersten bis fünften Eluates des beschriebenen Adsorptionstestes angegeben:

| Stimulierungsmittel | Oberflächenspannung (mN/m) der Testlösungen und des 1. bis 5. Eluates | | | | | |
|---|---|---|---|---|---|---|
| | Testlösung | 1. | 2. | 3. | 4. | 5. |
| Beispiel 1 | 19 | 41 | 30 | 29 | 28 | 26 |
| Beispiel 2 | 22 | 39 | 35 | 29 | 29 | 29 |
| Beispiel 3 | 23 | 37 | 32 | 28 | 28 | 27 |
| Vergleichsbeispiel | 22 | 51 | 51 | 48 | 41 | 40 |

Wie die Beispiele zeigen, erfüllen die erfindungsgemäßen Stimulierungsmittel den geforderten Test und sind daher bei der Gewinnung von Öl und Gas aus kohlenwasserstofführenden unterirdischen Formationen sehr wirksam. Sie besitzen vor allem ein besonders vorteilhaftes Adsorptionsverhalten, das heißt der Verlust an Fluortensid durch Adsorptionsvorgänge ist gering. Das gleiche Ergebnis wurde auch bei Verwendung von Isooctylphenolpolyglykolether mit 10 Ethylenoxid-Einheiten anstelle von Nonylphenolpolyglykolether mit 10 Ethylenoxid-Einheiten erzielt.

## Patentansprüche

1. Verfahren zur Stimulierung von Öl- und Gas-Sonden bei der Gewinnung von Öl und Gas aus unterirdischen Formationen, wobei die Öl/Gas enthaltende Formation im Bereich der Sonde mit einem Stimulierungsmittel aus der Gruppe der Fluortenside in Kontakt gebracht wird, dadurch gekennzeichnet, daß als Stimulierungsmittel mindestens ein Fluortensid der nachstehenden Formeln (1) bis (3) eingesetzt wird,

$$R_f\text{-}CF{=}CHCH_2N(C_2H_4OH)_2 \qquad (1)$$

$$R'_f\text{-}CONHC_3H_6N(C_2H_4OH)_2 \qquad (2)$$

$$R''_f\text{-}CONHC_3H_6\underset{\underset{O}{\downarrow}}{N}(C_2H_4OH)_2 \qquad (3)$$

worin $R_f$, $R'_f$ und $R''_f$ ein Perfluoralkylrest mit 5 bis 8 C-Atomen ist.

2. Verfahren nach Anspruch 1, dadurch gekennzeichnet, daß $R_f$, $R'_f$ und $R''_f$ ein Perfluoralkylrest mit 7 C-Atomen ist.

3. Verfahren nach Anspruch 1 oder 2, dadurch gekennzeichnet, daß als Stimulierungsmittel die Fluortenside in Kombination mit mindestens einem nicht-fluorierten, nicht-ionischen Tensid eingesetzt werden, das ausgewählt ist aus der Gruppe bestehend aus Alkoxypolyethylenglykolethern mit 6 bis 18 C-Atomen im Alkoxyrest und 3 bis 15 Ethylenoxid-Einheiten im Polyethylenglykoletherrest und Alkylphenoxypolyethylenglykolethern mit 6 bis 18 C-Atomen im Alkylrest und 3 bis 15 Ethylenoxid-Einheiten im Polyethylenglykoletherrest.

4. Verfahren nach Anspruch 1 oder 2, dadurch gekennzeichnet, daß als Stimulierungsmittel die Fluortenside in Kombination mit einem Alkoxypolyethylenglykolether mit 6 bis 18 C-Atomen im Alkoxyrest und 3 bis 15 Ethylenoxid-Einheiten im Polyethylenglykoletherrest oder einem Alkylphenoxypolyethylenglykolether mit 6 bis 18 C-Atomen im Alkylrest und 3 bis 15 Ethylenoxid-Einheiten im Polyethylenglykoletherrest im Gewichtsverhältnis von 1 : 1 eingesetzt werden.

5. Verfahren nach Anspruch 1 oder 2, dadurch gekennzeichnet, daß als Stimulierungsmittel die Fluortenside in Kombination mit einem Alkoxypolyethylenglykolether mit 6 bis 18 C-Atomen im Alkoxyrest und 3 bis 15 Ethylenoxid-Einheiten im Polyethylenglykoletherrest und einem Alkylphenoxypolyethylenglykolether mit 6 bis 18 C-Atomen im Alkylrest und 3 bis 15 Ethylenoxid-Einheiten im Polyethylenglykoletherrest im Gewichtsverhältnis von 1 : 1 : 1 eingesetzt werden.

6. Verfahren nach einem oder mehreren der Ansprüche 1 bis 5, dadurch gekennzeichnet, daß das Stimulierungsmittel in einer wäßrigen Trägerflüssigkeit eingesetzt wird.

7. Verfahren nach einem oder mehreren der Ansprüche 1 bis 5, dadurch gekennzeichnet, daß das Stimulierungsmittel in einer wäßrigen Trägerflüssigkeit eingesetzt wird, wobei die Menge an Stimulierungsmittel 0,001 bis 10 Gew.-% beträgt, Gewichtsprozente bezogen auf das Gewicht der Trägerflüssigkeit.

8. Verfahren nach einem oder mehreren der Ansprüche 1 bis 7, dadurch gekennzeichnet, daß das Inkontaktbringen der unterirdischen Formation mit dem Stimulierungsmittel durch Einpressen des Mittels in die Formation durchgeführt wird.

9. Stimulierungsmittel für die Stimulierung von Öl- und Gas-Sonden bei der Gewinnung von Öl und Gas aus unterirdischen Formationen, bestehend im wesentlichen aus

a) mindestens einem Fluortensid der nachstehenden Formeln (1) bis (3)

$$R_f\text{-}CF{=}CHCH_2N(C_2H_4OH)_2 \qquad (1)$$

$$R'_f\text{-}CONHC_3H_6N(C_2H_4OH)_2 \qquad (2)$$

$$R''_f\text{-}CONHC_3H_6\underset{\underset{O}{\downarrow}}{N}(C_2H_4OH)_2 \qquad (3)$$

worin $R_f$, $R'_f$ und $R''_f$ ein Perfluoralkylrest mit 5 bis 8 C-Atomen ist,

b) mindestens einem Alkoxypolyethylenglykolether mit 6 bis 18 C-Atomen im Alkoxyrest und 3 bis 15 Ethylenoxid-Einheiten im Polyethylenglykoletherrest und

c) mindestens einem Alkylphenoxypolyethylenglykolether mit 6 bis 18 C-Atomen im Alkylrest und 3 bis 15 Ethylenoxid-Einheiten im Polyethylenglykoletherrest, im Gewichtsverhältnis von a) : b) : c) wie 1 : 1 : 1.

10. Stimulierungsmittel nach Anspruch 9, bestehend im wesentlichen aus

a) mindestens einem Fluortensid der nachstehenden Formeln

$$n\text{-}C_7F_{15}CF{=}CHCH_2N(C_2H_4OH)_2$$

$$n\text{-}C_7F_{15}CONHC_3H_6N(C_2H_4OH)_2$$

$$n\text{-}C_7F_{15}CONHC_3H_6\underset{\displaystyle O}{\underset{\downarrow}{N}}(C_2H_4OH)_2$$

b) Isotridecylpolyglykolether mit 8 Ethylenoxid-Einheiten und

c) Nonylphenolpolyglykolether mit 10 Ethylenoxid-Einheiten oder Isooctylphenolpolyglykolether mit 10 Ethylenoxid-Einheiten, im Gewichtsvernältnis von a) : b) : c) wie 1 : 1 : 1.

## Revendications

1. Procédé pour stimuler des puits de pétrole et de gaz lors de l'extraction de pétrole et de gaz à partir de formations souterraines, la formation contenant le pétrole ou le gaz étant mise en contact, dans la région du puits, avec un agent de stimulation appartenant au groupe des surfactifs fluorés, procédé caractérisé en ce qu'on utilise, comme agent de stimulation, au moins un surfactif fluoré répondant à l'une des formules (1) à (3) suivantes :

$$R_f\text{-}CF{=}CHCH_2N(C_2H_4OH)_2 \qquad (1)$$

$$R'_f\text{-}CONHC_3H_6N(C_2H_4OH)_2 \qquad (2)$$

$$R''_f\text{-}CONHC_3H_6\underset{\displaystyle O}{\underset{\downarrow}{N}}(C_2H_4OH)_2 \qquad (3)$$

dans lesquelles $R_f$, $R'_f$ et $R''_f$ représentent chacun un radical perfluoralkyle contenant de 5 à 8 atomes de carbone.

2. Procédé selon la revendication 1, caractérisé en ce que $R_f$, $R'_f$ et $R''_f$ représentent chacun un radical perfluoralkyle contenant 7 atomes de carbone.

3. Procédé selon l'une des revendications 1 et 2, caractérisé en ce qu'on utilise, comme agents de stimulation, les surfactifs fluorés en association avec au moins un surfactif non ionique non fluoré pris dans l'ensemble constitué par les éthers alcoxy-polyéthylène-glycoliques (produits d'éthoxylation d'alcanols) contenant de 6 à 18 atomes de carbone dans le radical alcoxy et de 3 à 15 motifs éthylène-oxy dans le radical d'éther polyéthylène-glycolique, et les éthers alkylphénoxy-polyéthylène-glycoliques (produits d'éthoxylation d'alkylphénols) 5 contenant de 6 à 18 atomes de carbone dans le radical alkyle et de 3 à 15 motifs éthylène-oxy dans le radical d'éther polyéthylène-glycolique.

4. Procédé selon l'une des revendications 1 et 2, caractérisé en ce qu'on utilise, comme agents de stimulation, les surfactifs fluorés en association avec un éther alcoxy-polyéthylène-glycolique contenant de 6 à 18 atomes de carbone dans le radical alcoxy et de 3 à 15 motifs éthylène-oxy dans le radical d'éther polyéthylène-glycolique, ou un éther alkylphénoxy-polyéthylène-glycolique contenant de 6 à 18 atomes de carbone dans le radical alkyle et de 3 à 15 motifs éthylène-oxy dans le radical d'éther polyéthylène-glycolique, dans un rapport pondéral de 1:1.

5. Procédé selon l'une des revendications 1 et 2, caractérisé en ce qu'on utilise, comme agents de stimulation, les surfactifs fluorés en association avec un éther alcoxy-polyéthylène-glycolique contenant de 6 à 18 atomes de carbone dans le radical alcoxy et de 3 à 15 motifs éthylène-oxy dans le radical d'éther polyéthylène-glycolique, et un éther alkylphénoxy-polyéthylène-glycolique contenant de 6 à 18 atomes de carbone dans le radical alkyle et de 3 à 15 motifs éthylène-oxy dans le radical d'éther polyéthylène-glycolique, dans un rapport pondéral de 1:1:1.

6. Procédé selon l'une quelconque des revendications 1 à 5, caractérisé en ce qu'on utilise l'agent de stimulation dans un liquide support aqueux.

7. Procédé selon l'une quelconque des revendications 1 et 5, caractérisé en ce que l'agent de stimulation est mis en jeu dans un liquide support aqueux, la quantité de l'agent de stimulation étant comprise entre 0,001

et 10% en poids par rapport au poids du liquide support.

8. Procédé selon l'une quelconque des revendications 1 à 7, caractérisé en ce que la mise en contact de la formation souterraine avec l'agent de stimulation est effectuée par injection sous pression de l'agent dans la formation.

9. Agents de stimulation pour la stimulation de puits de pétrole et de gaz lors de l'extraction de pétrole et de gaz à partir de formations souterraines, agents essentiellement constitués :

a) d'au moins un surfactif fluoré répondant à l'une des formules (1) à (3) suivantes :

$$R_f\text{-}CF{=}CHCH_2N(C_2H_4OH)_2 \quad (1)$$

$$R'_f\text{-}CONHC_3H_6N(C_2H_4OH)_2) \quad (2)$$

$$R''_f\text{-}CONHC_3H_6\underset{\overset{\downarrow}{O}}{N}(C_2H_4OH)_2 \quad (3)$$

dans lesquelles $R_f$, $R'_f$ et $R''_f$ représentent chacun un radical perfluoralkyle contenant de 5 à 8 atomes de carbone,

b) d'au moins un éther alcoxy-polyéthylène-glycolique contenant de 6 à 18 atomes de carbone dans le radical alcoxy et de 3 à 15 motifs éthylène-oxy dans le radical d'éther polyéthylène-glycolique, et

c) d'au moins un éther alkylphénoxy-polyéthylène-glycolique contenant de 6 à 18 atomes de carbone dans le radical alkyle et de 3 à 15 motifs éthylène-oxy dans le radical d'éther polyéthylène-glycolique, dans un rapport pondéral de a) : b) : c) de 1:1:1.

10. Agents de stimulation selon la revendication 9, essentiellement constitués :

a) d'au moins un surfactif fluoré répondant à l'une des formules suivantes :

$$n\text{-}C_7F_{15}CF{=}CHCH_2N(C_2H_4OH)_2$$

$$n\text{-}C_7F_{15}CONHC_3H_6N(C_2H_4OH)_2$$

$$n\text{-}C_7F_{15}CONHC_3H_6\underset{\overset{\downarrow}{O}}{N}(C_2H_4OH)_2$$

b) d'un éther isotridécyl-polyglycolique contenant 8 motifs éthylène-oxy et

c) d'un éther nonylphényl-polyglycolique contenant 10 motifs éthylène-oxy ou d'un éther isooctylphényl-polyglycolique contenant-10 motifs éthylène-oxy, dans un rapport pondéral de a) : b) : c) de 1:1:1.

## Claims

1. A process for stimulating oil and gas wells in oil and gas production from subterranean formations, the oil/gas-containing formation being contacted in the region of the well with a stimulant from the group comprising the fluorosurfactants, characterised in that at least one fluorosurfactant of the following formulae (1) to (3),

$$R_f\text{-}CF{=}CHCH_2N(C_2H_4OH)_2 \quad (1)$$

$$R'_f\text{-}CONHC_3H_6N(C_2H_4OH)_2 \quad (2)$$

$$R''_f\text{-}CONHC_3H_6\underset{\overset{\downarrow}{O}}{N}(C_2H_4OH)_2 \quad (3)$$

in which $R_f$, $R'_f$ and $R''_f$ are a perfluoroalkyl radical having 5 to 8 carbon atoms, is used as stimulant.

2. The process as claimed in claim 1, wherein $R_f$, $R'_f$ and $R''_f$ are a perfluoroalkyl radical having 7 carbon atoms.

3. The process as claimed in claim 1 or 2, wherein the stimulant used is a fluorosurfactant in combination with at least one non-fluorinated nonionic surfactant selected from the group comprising alkoxypolyethylene glycol ethers having 6 to 18 carbon atoms in the alkoxy moiety and 3 to 15 ethylene oxide units in the polyethylene glycol ether moiety and alkylphenoxypolyethylene glycol ethers having 6 to 18 carbon atoms in the alkyl moiety and 3 to 15 ethylene oxide units in the polyethylene glycol ether moiety.

4. The process as claimed in claim 1 or 2, wherein the stimulant used is as fluorosurfactant in combination with an alkoxypolyethylene glycol ether having 6 to 18 carbon atoms in the alkoxy moiety and 3 to 15 ethylene oxide units in the polyethylene glycol ether moiety or an alkylphenoxypolyethylene glycol ether having 6 to 18 carbon atoms in the alkyl moiety and 3 to 15 ethylene oxide units in the polyethylene glycol ether moiety, in a weight ratio of 1 : 1.

5. The process as claimed in claim 1 or 2, wherein the stimulant used is a fluorosurfactant in combination with an alkoxypolyethylene glycol ether having 6 to 18 carbon atoms in the alkoxy moiety and 3 to 15 ethylene oxide units in the polyethylene glycol ether moiety and an alkylphenoxypolyethylene glycol ether having 6 to 18 carbon atoms in the alkyl moiety and 3 to 15 ethylene oxide units in the polyethylene glycol ether moiety, in a weight ratio of 1 : 1 : 1.

6. The process as claimed in one or more of claims 1 to 5, wherein the stimulant is employed in an aqueous carrier fluid.

7. The process as claimed in one or more of claims 1 to 5, wherein the stimulant is employed in an aqueous carrier fluid, the quantity of stimulant being 0.001 to 10 % by weight, the percentages by weight relating to the weight of the carrier fluid.

8. The process as claimed in one or more of claims 1 to 7, wherein the contacting of the subterranean formation with the stimulant is effected by injecting the latter into the formation.

9. A stimulant for stimulating oil and gas wells in oil and gas production from subterranean formations, composed essentially of

a) at least one fluorosurfactant of the following formulae (1) to (3)

$$R_f\text{-}CF{=}CHCH_2N(C_2H_4OH)_2 \quad (1)$$

$$R'_f\text{-}CONHC_3H_6N(C_2H_4OH)_2 \quad (2)$$

$$R''_f\text{-}CONHC_3H_6\underset{\displaystyle O}{\underset{\downarrow}{N}}(C_2H_4OH)_2 \quad (3)$$

in which $R_f$, $R'_f$ and $R''_f$ are a perfluoroalkyl radical having 5 to 8 carbon atoms,

b) at least one alkoxypolyethylene glycol ether having 6 to 18 carbon atoms in the alkoxy moiety and 3 to 15 ethylene oxide units in the polyethylene glycol ether moiety, and

c) at least one alkylphenoxypolyethylene glycol ether having 6 to 18 carbon atoms in the alkyl moiety and 3 to 15 ethylene oxide units in the polyethylene glycol ether moiety, in an a) : b) : c) weight ratio of 1 : 1 : 1.

10. A stimulant as claimed in claim 9, composed essentially of

a) at least one fluorosurfactant of the following formulae

$$n\text{-}C_7F_{15}CF{=}CHCH_2N(C_2H_4OH)_2$$

$$n\text{-}C_7F_{15}CONHC_3H_6N(C_2H_4OH)_2$$

$$n\text{-}C_7F_{15}CONHC_3H_6\underset{\displaystyle O}{\underset{\downarrow}{N}}(C_2H_4OH)_2$$

b) isotridecyl polyglycol ether having 8 ethylene oxide units, and

c) nonylphenol polyglycol ether having 10 ethylene oxide units or isooctyl phenol polyglycol ether having 10 ethylene oxide units, in an a) : b) : c) weight ratio of 1 : 1 : 1.